# FASCICULE DE BREVET EUROPEEN

(11) **EP 2 086 794 B1**
(45) Date de publication et mention de la délivrance du brevet: **23.03.2011**
(21) Numéro de dépôt: 07858733.4
(22) Date de dépôt: 26.11.2007
(51) Int. Cl.: B60R 11/02, H04M 1/11, G12B 9/08

(54) **SUPPORT POUR APPAREIL ELECTRONIQUE NOMADE**
HALTER FÜR EINE ELEKTRONISCHE ROAMING-VORRICHTUNG
SUPPORT FOR ROAMING ELECTRONIC APPARATUS

(30) Priorité: 28.11.2006 FR 0655146
(43) Date de publication de la demande: 12.08.2009
(73) Titulaire: ADM Concept, 87069 Limoges Cedex (FR)
(72) Inventeur: MOCQUARD, Dominique, 75014 Paris (FR)
(74) Mandataire: Dossmann, Gérard
(86) Numéro de dépôt international: PCT/FR2007/052393
(87) Numéro de publication internationale: WO 2008/065298

(56) Documents cités:
- EP-A- 0 950 571
- EP-A- 0 950 572
- DE-A1- 10 032 658
- DE-A1- 10 032 684
- DE-A1- 19 752 385
- DE-A1- 19 835 017
- DE-A1- 19 951 968
- DE-U1- 29 501 614
- US-B1- 7 062 300

## Description

L'invention concerne un socle pour appareil électronique nomade.

Plus particulièrement, l'invention concerne un tel socle qui est destiné à être intégré à une planche de bord d'un véhicule automobile.

Par « appareil électronique nomade », on entend, dans le cadre de la présente description, tout type d'appareil électronique portatif, grand public, autonome, et destiné à exécuter une ou plusieurs fonctions élémentaires, tels qu'un navigateur GPS, un lecteur numérique portatif de musique, de type lecteur MP3, un assistant personnel, un poste téléphonique mobile, ou encore un support de stockage de données tel qu'une clé USB, une carte SIM, une carte mémoire, ...

Comme on le sait, ce type d'appareil est généralement pourvu de connecteurs ou ports servant à transférer en mémoire, ou, au contraire, extraire de leur mémoire, des données à mémoriser ou mémorisées ou à assurer leur alimentation électrique.

Ainsi, par exemple, dans le cadre de l'utilisation d'un lecteur MP3, le port est utilisé pour lire des fichiers musicaux préalablement téléchargés et pour assurer le rechargement de batteries d'alimentation.

Ce port peut également être utilisé pour coopérer avec un port correspondant d'un système audio de plus forte capacité.

C'est ainsi que les appareils électroniques nomades de ce type sont généralement livrés avec un socle qui permet, d'une part, d'assurer l'alimentation électrique de l'appareil et, d'autre part, d'assurer un transfert bidirectionnel des données.

Dans ce cadre, il existe un besoin pour un socle de ce type qui puisse être intégré à une planche de bord d'un véhicule automobile afin de permettre à une utilisateur de disposer des fonctionnalités liées à l'utilisation de l'appareil lorsqu'il utilise son véhicule, tout en conservant le caractère nomade de l'appareil.

On peut se référer à cet égard au document EP 0 950 571 qui décrit un support de téléphone comprenant une boîtier ouvert monté sur le tableau de bord et un socle de téléphone monté pivotant dans le boîtier autour d'un axe vertical entre une position fermée du support et une position ouverte de réception du téléphone.

Le but de l'invention est donc de fournir un support pour appareil électronique nomade permettant de répondre à ce besoin.

Un autre but de l'invention est de fournir un tel support qui permette de conserver l'aspect esthétique général de la planche de bord, en particulier lorsque le support n'est pas utilisé.

L'invention a donc pour objet un support pour appareil électronique nomade, ledit support étant destiné à constituer une partie d'une planche de bord d'un véhicule automobile.

Ce support comporte une embase destinée à être solidarisée à la planche de bord et un socle de réception de l'appareil délimitant au moins un logement de réception de l'appareil.

Le socle est en outre monté angulairement déplaçable par rapport à l'embase en première position de fermeture du support et au moins une deuxième position angulaire rendant accessible le logement.

Grâce à cet agencement, l'utilisateur dispose, au sein de son véhicule, d'un logement destiné à recevoir un appareil électronique nomade conservant à la planche son aspect esthétique d'origine, en procurant l'impression que ce support a été installé en première monte, c'est-à-dire à la fabrication du véhicule.

Selon une autre caractéristique de l'invention, le logement du socle comporte un connecteur de raccordement de l'appareil. On fournit alors en outre des moyens permettant le raccordement de l'appareil nomade permettant ainsi de transférer des données, par exemple des fichiers musicaux ou des données audio et d'alimenter l'appareil.

Selon une autre caractéristique de l'invention, le connecteur est monté de manière amovible dans le fond du logement et constitue un port interchangeable.

Selon encore une autre caractéristique de l'invention, le support comporte des moyens élastiques sollicitant le socle dans ladite au moins une position angulaire et des moyens libérables de maintien du socle dans la première position angulaire.

Dans un mode de réalisation, l'embase comporte une forme générale annulaire, l'embase et le socle comportant l'un deux ergots radiaux diamétralement opposés et l'autre deux logements dans lesquels tourillonnent les ergots.

L'embase peut en outre comporter un pion radial qui coopère, dans la première position angulaire, avec un élément de retenue formant pêne radialement déplaçable par rapport au socle.

Avantageusement, la surface de fond du socle tournée vers l'extérieur dans la deuxième position angulaire est pourvue d'un connecteur additionnel pour recevoir un appareil correspondant.

Par exemple, le socle comporte un volet mobile manoeuvrable manuellement pour venir recouvrir ou découvrir ledit connecteur additionnel.

Par exemple, l'appareil est constitué par au moins un élément choisi parmi un navigateur GPS, un lecteur portatif de musique numérique, un assistant personnel, un poste téléphonique numérique mobile, une carte SIM ou une carte mémoire.

Selon encore une autre caractéristique de l'invention, le support comporte des moyens de raccordement électrique du ou de chaque connecteur avec des fils dédiés au raccordement d'un autoradio.

Par exemple, le connecteur est constitué par un connecteur de type USB ou un connecteur d'accueil réplicateur de ports.

Enfin, avantageusement, l'embase comporte un enjoliveur séparé.

D'autres buts, caractéristiques et avantages de l'invention apparaîtront à la lecture de la description suivante, donnée uniquement à titre d'exemple non limitatif, faite en référence aux dessins annexés, sur lesquels:
- la figure 1 est une vue en perspective éclatée d'un support conforme à l'invention;
- les figures 2, 3 et 4 sont des vues de profil du socle dans la première position angulaire;
- les figures 5 et 6 sont des vues de profil du socle dans la deuxième position angulaire;
- les figures 7, 8, 9 et 10 illustrent le basculement du socle de la première position angulaire vers la deuxième position angulaire; et
- la figure 11 montre le basculement du socle de la deuxième position angulaire vers la première position angulaire.

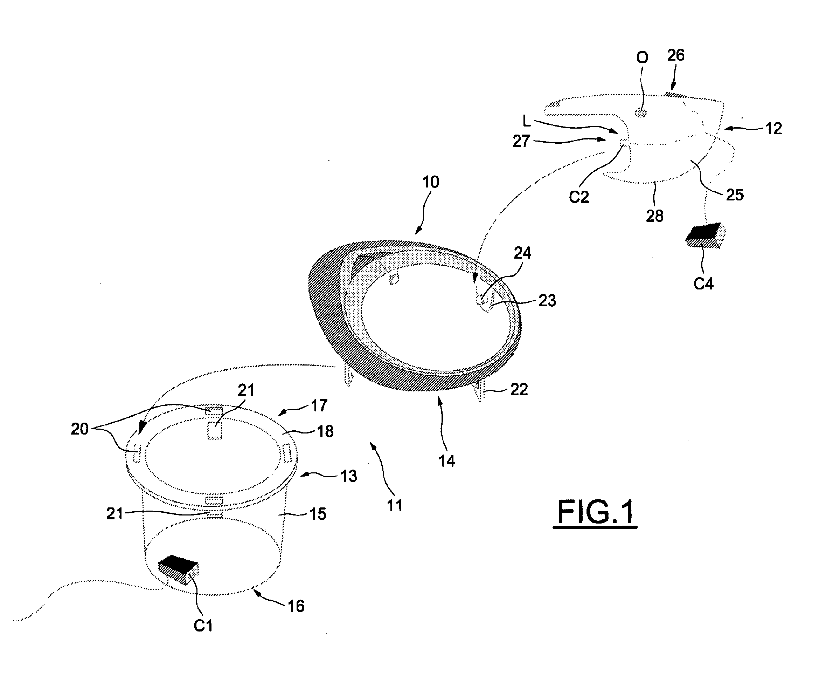

Sur la figure 1, on a représenté une vue en perspective éclatée d'un support de maintien et de raccordement d'un appareil électronique nomade conforme à l'invention, désigné par la référence numérique générale 10.

Le support 10 est destiné à être intégré à une planche de bord d'un véhicule automobile.

Dans l'exemple de réalisation représenté, il constitue un accessoire distinct de la planche de bord sur laquelle il vient se monter après découpe, dans celle-ci, d'une ouverture. On notera cependant que l'on ne sort pas du cadre de l'invention lorsque le support est venu de matière avec la planche de bord.

Comme on le voit sur la figure 1, le support 10 comporte une embase 11 qui vient se monter sur la planche de bord et un socle 12 qui vient, à son tour, se monter sur l'embase 11 et qui est destiné à recevoir un appareil électronique nomade.

Comme on le voit, l'embase 11 comporte un corps 13 et un capot ouvert 14 séparé formant un enjoliveur.

Le corps 13 comprend essentiellement une jupe 15 généralement cylindrique pourvue d'une extrémité libre 16 et d'une extrémité opposée 17 formant un rebord annulaire 18. La jupe 15 délimite intérieurement un logement E de réception du socle 12. Elle est destinée à être insérée dans une ouverture pratiquée dans la planche de bord.

Dans cette position, après montage, le corps 13 repose en appui, par son rebord annulaire 18, contre la face externe de la planche de bord.

En outre, dans cette position, après montage, un connecteur C1 de raccordement dédié traditionnellement au branchement d'un autoradio est disposé au voisinage de l'extrémité libre 16 de la jupe 15.

Le rebord 18 est encore pourvu d'un certain nombre de passages, tels que 20, servant au montage du capot 14 par encliquetage dans des découpes 21 pratiquées dans la jupe en regard des passages.

Le capot comporte en effet une forme globalement annulaire. Il comporte un certain nombre de pattes d'encliquetage 22 destinées à s'insérer dans les passages 20 pratiqués dans le rebord 18 pour venir s'encliqueter de manière amovible dans les ouvertures 21.

Le capot 14 est par ailleurs pourvu de pattes latérales, telles que 23, dressées axialement par rapport à l'axe général du support 10. Ces pattes sont disposées de manière diamétralement opposée et sont pourvues d'ergots transversaux coaxiaux, tels que 24, servant au montage pivotant du socle 12.

En ce qui concerne le socle 12, celui-ci comporte un corps 25 pourvu de deux orifices transversaux O dans lesquels tourillonnent les ergots 24 de manière à permettre le montage pivotant du socle 12 sur l'embase 11 et, en particulier, sur le capot 14. On pourrait également, en variante prévoir les orifices O dans les pattes 23 et les ergots transversaux dans le corps 25 du socle.

Le corps 25 comporte un premier côté 26 qui est destiné à constituer la face supérieure du support, dans une première position angulaire du socle 12, un deuxième côté 27, qui est destiné à constituer la face supérieure du support dans une deuxième position angulaire du socle 12, et un troisième côté 28 arrondi.

Comme on le voit, le premier côté 26 présente une forme globalement plane mais légèrement convexe, à convexité tournée vers l'extérieur, de manière à former, dans la première position angulaire, une surface sensiblement continue avec le capot 14 et avec la planche de bord.

Le deuxième côté 27 forme, quant à lui, un logement L destiné à recevoir l'appareil électronique. A cet effet, le logement L est pourvu, en son fond, d'un port ou connecteur C2 de type USB, ou d'un connecteur d'accueil réplicateur de ports ou d'un autre type de port, en fonction de la nature de l'appareil à connecter, destiné à coopérer avec un port correspondant prévu sur l'appareil.

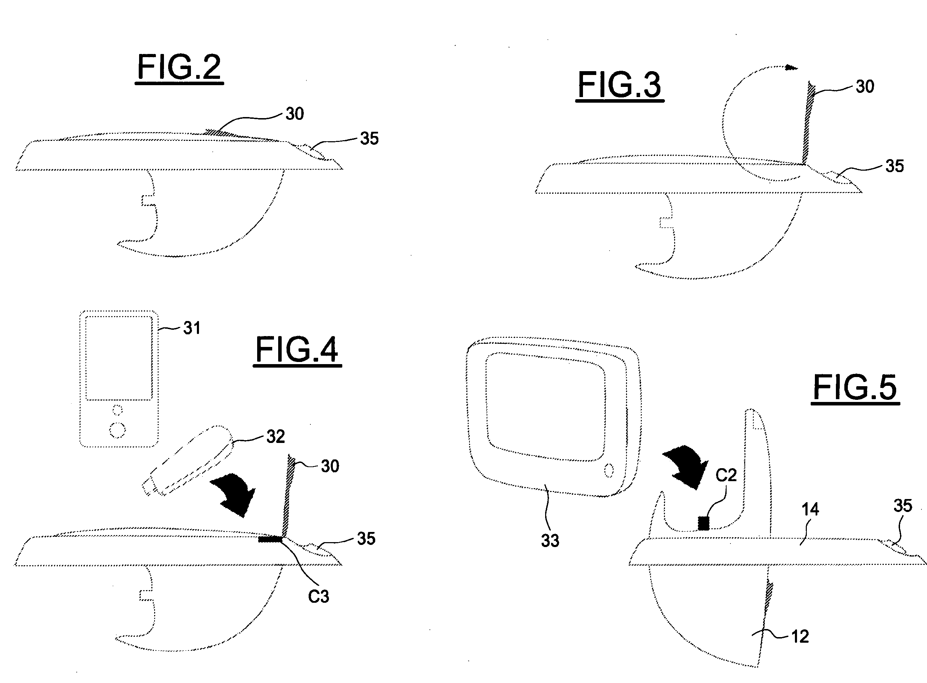

Comme visible sur les figures 2, 3 et 4, dans l'exemple représenté, et de manière optionnelle, le premier côté 26 est pourvu d'un capot 30 manoeuvrable manuellement par un utilisateur pour libérer un port ou connecteur C3 dédié au raccordement d'un appareil de type lecteur MP3 (31) ou clé USB (32).

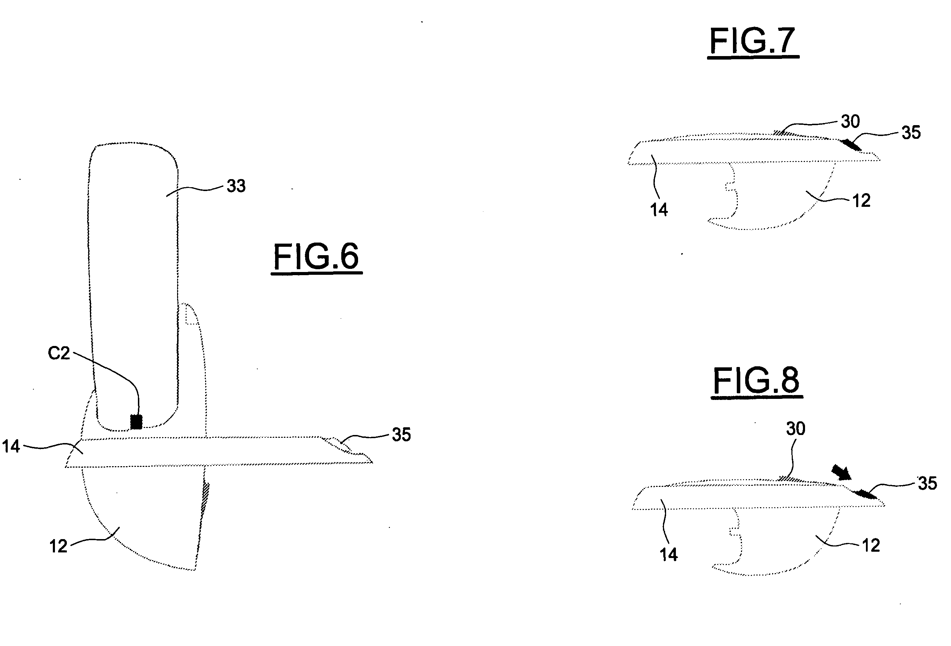

Ainsi, dans cet exemple de réalisation, le support est susceptible d'adopter deux positions angulaires, visibles respectivement sur les figures 2, 3 et 4, d'une part, et sur les figures 5 et 6, d'autre part. Dans la première position, le premier côté 26 du corps 25 du socle 12 est affleurant et vient fermer le support. Si on le souhaite, le volet mobile 30 peut être déplacé pour venir raccorder un appareil électronique de type lecteur MP3 ou clé USB.

Après basculement du socle 12 de la première position angulaire vers la deuxième position angulaire, le logement L s'étend vers l'extérieur du support et permet de recevoir un autre type d'appareil nomade, par exemple un navigateur GPS 33.

En se référant aux figures 7 à 10, par exemple, le socle est associé à un ressort (non représenté) servant à le solliciter dans la deuxième position angulaire, comme illustré par la flèche F. L'embase 11, et en particulier le capot 14, est pourvue d'un élément de verrouillage 35 de type pêne qui coopère avec une empreinte correspondante pratiquée dans le socle pour le verrouiller dans la première position.

Ainsi, pour faire basculer le socle de la première position vers la deuxième position, il convient simplement d'actionner l'élément de verrouillage 35 de manière à libérer le socle 12, le ressort se chargeant alors de le déplacer vers la deuxième position.

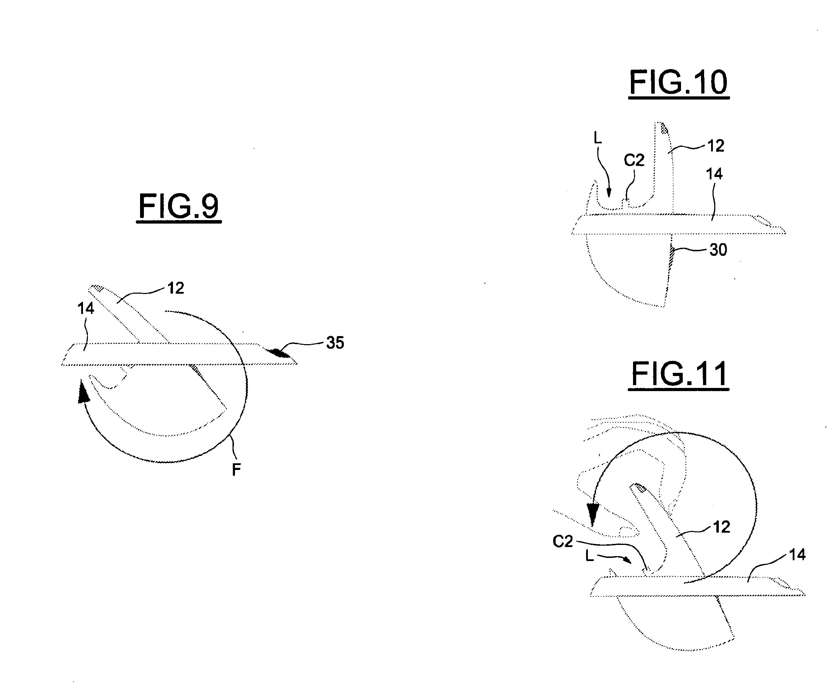

Au contraire, le repositionnement du socle dans la première position s'effectue manuellement, comme illustré sur les figures 9 et 10, à l'encontre de l'effort exercé par le ressort.

En se référant à nouveau à la figure 1, les ports de connexion C2 et C3 sont raccordés à un connecteur C4 destiné à coopérer avec le connecteur C1 servant traditionnellement au raccordement d'un autoradio.

Ainsi, grâce à cet agencement, le socle 12, qui peut adopter deux positions angulaires servant l'une à masquer le support et, après avoir manoeuvré le capot 30, à disposer d'un premier connecteur pour le raccordement d'appareils pourvus d'un premier type de port et, l'autre à proposer un logement et un deuxième connecteur pour recevoir et raccorder des appareils pourvus d'un deuxième type de port permet de disposer d'un support embarqué destiné à recevoir des appareils de différents types pour assurer leur alimentation et la transmission des données, en particulier des fichiers musicaux ou des données audio, vers le véhicule pour être restitués à l'utilisateur par l'intermédiaire des hauts parleurs.

On notera enfin que l'invention n'est pas limitée au mode de réalisation décrit.

On ne sort en effet pas du cadre de l'invention lorsque le support selon l'invention, et en particulier le logement L, est dépourvu de connecteur. Le logement n'assure alors plus qu'une fonction de support de l'appareil, qui peut alors rester autonome ou être raccordé par tout autre moyen approprié.

On notera également que le support qui vient d'être décrit est particulièrement adapté pour constituer un accessoire destiné à être monté sur la planche de bord d'un véhicule en deuxième monte chez un concessionnaire de véhicule automobile ou chez un revendeur d'accessoires pour véhicules automobile.

On prévoira alors avantageusement d'utiliser un gabarit de découpe destiné à former dans la planche de bord une découpe de dimensions correspondant à celles de la jupe 15.

Le capot 14 qui vient se fixer par clipsage sur le corps de l'embase permet alors d'assurer l'effet esthétique de l'assemblage.

Mais, bien entendu, et comme indiqué précédemment, le support selon l'invention peut également être incorporé dans la planche de bord en première monte.

On notera également que selon un avantage de l'invention, la réalisation en trois parties du support, et en particulier la réalisation du capot 14 sous la forme d'une pièce séparée, permet de prévoir la réalisation du corps 13 de l'embase et du socle selon des dimensions standard pour tous types de véhicule, le capot constituant un élément interchangeable du support et présentant des dimensions choisies en fonction de la position du support sur la planche de bord, de la configuration de la planche ou, de manière générale du type de véhicule.

## Revendications

1. Support pour appareil électronique nomade, ledit support étant destiné à constituer une partie d'une planche de bord d'un véhicule automobile, comportant une embase (11) et un socle (12) de réception de l'appareil délimitant au moins un logement (L) de réception de l'appareil, **caractérisé en ce que** l'embase (11) comprend une jupe (15) généralement cylindrique pourvue d'une extrémité (17) formant un rebord annulaire (18) venant au montage en appui contre la face,externe de la planche de bord, et un capot ouvert (14), le socle (12) étant monté angulairement déplaçable par rapport au capot ouvert (14) entre une première position de fermeture du support et au moins une deuxième position angulaire rendant accessible ledit logement.

2. Support selon la revendication 1, **caractérisé en ce que** le logement du socle est pourvu, en son fond, d'un connecteur (C2) de raccordement de l'appareil

3. Support selon la revendication 2, **caractérisé en ce que** le connecteur (C2) est monté de manière amovible dans le fond du logement et constitue un port interchangeable.

4. Support selon l'une quelconque des revendications 1 à 3, **caractérisé en ce qu'**il comporte des moyens élastiques sollicitant le socle (12) dans ladite au moins une deuxième position angulaire et des moyens (35) libérables de maintien du socle dans la première position angulaire.

5. Support selon la revendication 4, **caractérisé en ce que** l'embase (11) comporte une forme générale annulaire et **en ce que** l'embase (11) et le socle (12) comportent l'un, deux ergots (24) radiaux diamétralement opposés et l'autre, deux logements (O) dans lesquels tourillonnent les ergots.

6. Support selon la revendication 5, **caractérisé en ce que** l'embase comporte un pion radial qui coopère avec un élément de retenue (35) formant pêne radialement déplaçable par rapport au socle.

7. Support selon l'une quelconque des revendications 1 à 6, **caractérisé en ce que** la surface de fond du socle tournée vers l'extérieur dans la deuxième position est pourvue d'un connecteur additionnel (C3) pour recevoir un appareil correspondant.

8. Support selon la revendication 7, **caractérisé en ce que** le socle comporte un volet mobile (30) manoeuvrable manuellement pour venir recouvrir ou découvrir ledit connecteur additionnel.

9. Support selon l'une quelconque des revendications 1 à 8, **caractérisé en ce que** l'équipement est constitué par au moins un élément choisi parmi un navigateur GPS, un lecteur portatif de musique numérique, un assistant personnel, un poste téléphonique mobile, une clé USB, une carte SIM et une carte mémoire.

10. Support selon la revendication 9, **caractérisé en ce qu'**il comporte des moyens de raccordement électrique du ou de chaque connecteur avec des fils dédiés au raccordement d'un autoradio.

11. Support selon l'une quelconque des revendications 1 à 10, **caractérisé en ce que** le connecteur est un connecteur USB ou un connecteur d'accueil réplicateur de ports.

12. Support selon l'une quelconque des revendications 1 à Il, **caractérisé en ce que** l'embase comporte un enjoliveur (14) séparé.

## Claims

1. Support for a roaming electronic apparatus, the said support being designed to form a portion of an instrument panel of a motor vehicle, comprising a seat (11) and a mount (12) for accommodating the apparatus delimiting at least one housing (L) for accommodating the apparatus, **characterized in that** the seat (11) comprises a generally cylindrical skirt (15) provided with an end (17) forming an annular rim (18) which, when installed, rests against the outer face of the instrument panel, and an open cover (14), the mount (12) being mounted so as to be able to be moved angularly relative to the open cover (14) between a first position of closure of the support and at least one second angular position making the said housing accessible.

2. Support according to Claim 1, **characterized in that** the housing of the mount is provided, at its bottom, with a connector (C2) for connection of the apparatus.

3. Support according to Claim 2, **characterized in that** the connector (C2) is mounted in a removable manner in the bottom of the housing and forms an interchangeable port.

4. Support according to any one of Claims 1 to 3, **characterized in that** it comprises elastic means forcing the mount (12) into the said at least one second angular position and releasable means (35) for holding the mount in the first angular position.

5. Support according to Claim 4, **characterized in that** the seat (11) comprises a generally annular shape and **in that** the seat (11) and the mount (12) comprise, for one of them, two diametrically opposed radial spigots (24) and, for the other, two housings (O) in which the spigots swivel.

6. Support according to Claim 5, **characterized in that** the seat comprises a radial pin which interacts with a retaining element (35) forming a bolt that can be moved radially relative to the mount.

7. Support according to any one of Claims 1 to 6, **characterized in that** the bottom surface of the mount turned towards the outside in the second position is provided with an additional connector (C3) in order to accommodate a corresponding apparatus.

8. Support according to Claim 7, **characterized in that** the mount comprises a movable flap (30) that can be manoeuvred manually in order to cover or uncover the said additional connector.

9. Support according to any one of Claims 1 to 8, **characterized in that** the equipment consists of at least one element chosen from a GPS personal navigation device, a personal digital music device, a personal digital assistant, a mobile telephone, a USB key, a SIM card and a memory card.

10. Support according to Claim 9, **characterized in that** it comprises means for electrically connecting the or each connector to wires dedicated to the connection of a car radio.

11. Support according to any one of Claims 1 to 10, **characterized in that** the connector is a USB connector or a port-expander receiving connector.

12. Support according to any one of Claims 1 to 11, **characterized in that** the seat comprises a separate trim (14).

## Patentansprüche

1. Halter für ein nomadisches elektronisches Gerät, wobei der Halter dazu bestimmt ist, einen Teil eines Armaturenbretts eines Kraftfahrzeugs zu bilden, mit einer Grundplatte (11) und mit einem Aufnahmesockel (12) für das Gerät, der mindestens einen Aufnahmesitz (L) des Geräts begrenzt, **dadurch gekennzeichnet, dass** die Grundplatte (11) eine allgemein zylindrische Schürze (15), die mit einem Ende (17) versehen ist, das eine ringförmige Randleiste (18) bildet, die beim Einbau gegen die Außenseite des Armaturenbretts in Auflage kommt, und eine offene Abdeckung (14) enthält, wobei der Sockel (12) bezüglich der offenen Abdeckung (14) zwischen einer ersten Schließstellung des Halters und mindestens einer zweiten Winkelstellung winkelmäßig verschiebbar montiert ist, die den Sitz zugänglich macht.

2. Halter nach Anspruch 1, **dadurch gekennzeichnet, dass** der Sitz des Sockels an seinem Boden mit einem Anschlussverbinder (C2) des Geräts versehen ist.

3. Halter nach Anspruch 2, **dadurch gekennzeichnet, dass** der Verbinder (C2) lösbar in den Boden des Sitzes montiert ist und einen austauschbaren Port bildet.

4. Halter nach einem der Ansprüche 1 bis 3, **dadurch gekennzeichnet, dass** er elastische Einrichtungen, die den Sockel (12) in die mindestens eine zweite Winkelstellung beaufschlagen, und lösbare Halteeinrichtungen (35) des Sockels in der ersten Winkelstellung aufweist.

5. Halter nach Anspruch 4, **dadurch gekennzeichnet, dass** die Grundplatte (11) eine allgemeine Ringform aufweist, und dass die Grundplatte (11) und der Sockel (12) die eine zwei diametral entgegengesetzte radiale Zapfen (24) und der andere zwei Sitze (O) aufweisen, in denen die Zapfen drehen.

6. Halter nach Anspruch 5, **dadurch gekennzeichnet, dass** die Grundplatte einen radialen Flachring aufweist, der mit einem Rückhalteelement (35) zusammenwirkt, das einen bezüglich des Sockels radial verschiebbaren Riegel bildet.

7. Halter nach einem der Ansprüche 1 bis 6, **dadurch gekennzeichnet, dass** die in der zweiten Stellung nach außen weisende Bodenfläche des Sockels mit einem zusätzlichen Verbinder (C3) zur Aufnahme eines entsprechenden Geräts versehen ist.

8. Halter nach Anspruch 7, **dadurch gekennzeichnet, dass** der Sockel eine bewegliche Klappe (30) aufweist, die manuell betätigbar ist, um den zusätzlichen Verbinder zu bedecken oder aufzudecken.

9. Halter nach einem der Ansprüche 1 bis 8, **dadurch gekennzeichnet, dass** die Ausrüstung aus mindestens einem Element besteht, das ausgewählt wird aus einem GPS-Navigator, einem tragbaren digitalen Musik-Player, einem persönlichen Assistenten, einer Mobiltelefonstation, einem USB-Stick, einer SIM-Karte und einer Speicherkarte.

10. Halter nach Anspruch 9, **dadurch gekennzeichnet, dass** er elektrische Anschlusseinrichtungen des oder jedes Verbinders mit Drähten aufweist, die für den Anschluss eines Autoradios bestimmt sind.

11. Halter nach einem der Ansprüche 1 bis 10, **dadurch gekennzeichnet, dass** der Verbinder ein USB-Verbinder oder ein Portreplikator-Dockingverbinder ist.

12. Halter nach einem der Ansprüche 1 bis 11, **dadurch gekennzeichnet, dass** die Grundplatte eine getrennte Zierleiste (14) aufweist.
